# EUROPEAN PATENT APPLICATION

(11) **EP 4 826 584 A1**
(43) Date of publication of application: **21.10.2026**
(21) Application number: 26172871.1
(22) Date of filing: 16.04.2026
(51) Int. Cl.: G06F 21/64, H04L 9/32, H04N 21/254, H04N 21/647, H04N 21/854, H04N 21/2389

(54) **SYSTEM AND METHOD FOR PERFORMING DATA ENCRYPTION TO AID DEEPFAKE DETECTION**

(30) Priority: 16.04.2025 US 202563789803 P; 15.04.2026 US 202619648878
(71) Applicant: Tyco Fire & Security GmbH, 8212 Neuhausen am Rheinfall (CH)
(72) Inventor: HOUSTON, Allen, Lisburn, BT28 3HS (GB); FALIK, Yohay, Petah Tiqwa (IL); LAWRENCE, Peter, Lisburn, BT28 2RS (GB); GOTTUMUKKAL, Rajkiran Kumar, 560037 Bangaluru (IN); NEILL, Terence, Lisburn, BT27 5DS (GB)
(74) Representative: Meissner Bolte Nürnberg

(57) **Abstract**

The present disclosure relates to a system comprising a processing circuit to receive a data stream captured by a camera and perform segmentation of the data stream into one or more data frames. Further, the processing circuit encodes the one or more data frames using one or more encoding techniques to generate an encoded data stream and transmits the encoded data stream to one or more devices. The encoded data stream contains one or more identifiers that alter in an event of generation of a deepfake or doctored data stream from the encoded data stream, thereby aiding deepfake data detection.

## Description

The present Application for Patent claims priority to Provisional Patent Application No. 63/789,803, entitled "SYSTEM AND METHOD FOR PERFORMING DATA ENCRYPTION TO AID DEEPFAKE DETECTION" filed April 16, 2025, which is assigned to the assignee hereof and hereby expressly incorporated by reference herein for all purposes.

The present disclosure relates generally to security systems. More particularly, the present disclosure relates to data encryption by security systems.

Security systems deploy cameras to monitor building spaces. The cameras capture data that includes video and/or audio that are further transferred to devices external to the security systems. Once the data is shared with external devices there is limited control over prevention of tampering. Such videos are sometimes manipulated or doctored to present false information, often deceiving viewers. For example, unauthorized individuals may alter parameters of the videos by cropping, zooming, applying a filter, time-shifting audio, taking a snapshot to alter content, overlaying music, muting sound, changing faces etc., and further circulate such tampered data (also referred to as deepfake data/videos). With the increasing prevalence of such deepfake videos, ensuring the trustworthiness of videos has become a critical concern.

There is therefore felt a need to provide a system and method to efficiently encode videos to avoid manipulation of the videos.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

One aspect of the present disclosure relates to a system that includes one or more memories, and one or more processing circuits coupled with the one or more memories and configured to cause the system to receive a data stream captured by a camera, segment the data stream into one or more data frames, and encode the one or more data frames using one or more encoding techniques to generate an encoded data stream, the encoded data stream comprising one or more identifiers, such that tampering or deepfake generation causes detectable alteration of the one or more identifiers.

Another aspect of the present disclosure relates to a method for performing data encryption. The method includes one or more steps performed by a processing circuit comprising receiving a data stream; performing segmentation of the data stream into one or more data frames; encoding the one or more data frames using one or more encoding techniques to generate an encoded data stream. The encoded data stream includes one or more identifiers that alter in an event of generation of a deepfake data stream from the encoded data stream, allowing for detection of deepfake or other tampering of the data stream.

Another aspect relates to one or more non-transitory computer-readable media including code for causing one or more processing circuits to encode a data stream for deepfake detection. The code includes code for receiving a data stream captured by a camera, segmenting the data stream into one or more data frames, and encoding the one or more data frames using one or more encoding techniques to generate an encoded data stream, the encoded data stream comprising one or more identifiers, such that tampering or deepfake generation causes detectable alteration of the one or more identifiers.

In a further aspect, an apparatus is provided that includes a memory configured to store instructions, and one or more processors communicatively coupled with the memory. The one or more processors are configured to execute the instructions to perform the operations of methods described herein. In another aspect, an apparatus is provided that includes means for performing the operations of methods described herein. In yet another aspect, one or more computer-readable medium are provided including code executable by one or more processors to perform the operations of methods described herein.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a perspective view schematic drawing of a building with a security system, according to some embodiments.
FIG. 2 is a block diagram of building security systems for multiple buildings communicating with a cloud-based security system, according to some embodiments.
FIG. 3 is a block diagram illustrating several components of an access control system (ACS) that can be implemented in the building security systems of FIG. 2, according to some embodiments.
FIG. 4 is a video management system for performing data encryption, according to some embodiments of the present disclosure.
FIG. 5 shows a frame-based approach to perform data encryption, according to some embodiments of the present disclosure.
FIG. 6 shows a GOP (Group-of-Picture)-based approach to perform data encryption, according to some embodiments of the present disclosure.
FIG. 7 shows a flowchart of an example of a method for performing data encryption, according to some embodiments of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Security systems can deploy cameras to monitor building spaces, capturing video and audio data that can be subsequently transferred to devices within or beyond the security system. Once this data leaves the controlled environment of the security system, however, the ability to prevent unauthorized alteration becomes severely limited. Video recordings may be manipulated or doctored to present false information that deceives viewers. For example, unauthorized individuals may alter video parameters by cropping footage, zooming into or out of scenes, applying filters, time-shifting audio tracks relative to video, capturing snapshots to alter content, overlaying unrelated audio, muting sound, swapping faces, or otherwise modifying the data before circulating the tampered recordings. With the increasing prevalence of such manipulated videos - often referred to as deepfakes - ensuring the trustworthiness and authenticity of captured data can be a concern. The problem may be compounded by the fact that, once such data has been shared with external devices or distributed across networks, there may generally be no reliable mechanism for a downstream recipient to verify whether the data has been altered from the form in which it was originally captured, or to trace the data back to its true point of origin.

Aspects described herein can address these concerns by encoding a captured data stream with one or more identifiers at or near the point of capture, such that any subsequent tampering or deepfake generation may cause a detectable alteration of those identifiers, enabling downstream recipients to verify the integrity and authenticity of the data. In an aspect, a processing circuit can receive a data stream captured by a camera, segment the stream into data frames, and encode data frames to generate an encoded data stream. The identifiers may be associated with the origin, chain of custody, or metadata of the captured data. By tying the identifiers to the origin and chain of custody of the data, aspects described herein can enable traceability back to the specific device and circumstances under which the data was captured, which may prevent an unauthorized party from substituting fabricated content without detection. The origin information may include, for example, a device identifier, a device model, a network address such as an internet protocol address or media access control address, firmware version information, or global positioning system coordinates. The metadata may include, for example, a capture timestamp, pixel information, a file name, file size, or format extension.

Aspects described herein can include a variety of encoding techniques that may be applied individually or in combination to provide multiple, complementary layers of protection. For example, an encoded message comprising the identifiers may be embedded within each data frame or multiple data frames so that the identifying information travels with every segment or multiple segments, so that the identifiers may be resistant to stripping during any alteration attempt. Some aspects also relate to computing a hash for each data frame, where the hash acts as a unique numerical fingerprint enabling verification that the content of any given frame has not been modified. In some aspects, each frame's hash may be linked to the hash of the preceding frame, creating a chain of continuity that prevents the insertion, removal, or reordering of individual frames without detection.

Aspects described herein can include a frame-based encoding approach in which an encoded frame is inserted at one or more positions within the stream. This encoded frame may carry a public key, a digital signature, a hash, or device metadata associated with the capture device. The frame may be transparent to decoders, and thus the stream can carry all information needed to verify its own authenticity without disrupting normal playback or requiring changes to existing decoding infrastructure. A group-of-pictures-based encoding approach can be used to insert the encoded frame at a different position to provide flexibility in how identifiers are positioned and to accommodate various frame structures. These approaches may be combined by aggregating the individual frame hashes, producing a composite fingerprint of the entire stream that further strengthens integrity verification.

Aspects described herein can include techniques for independently encoding distinct components of the data stream, such as audio, video, and metadata. A separate hash may be computed for each such component, and/or a transport protocol extension, such as a real-time transport protocol extension, may be added to at least the audio portion to enable independent audio encoding. Encoding each component separately can enable independent verification of individual data sections during validation, and correlating hashes and timestamps across all components can ensure that synchronization discrepancies, such as audio that has been time-shifted relative to its corresponding video, are detectable. Some aspects include using a summation frame that represents an aggregate of the stream's content and can be inserted at a position determined by one or more encoding rules, which can enable verification that no portion of the data has been lost or altered. Watermarking or steganography may likewise be applied as a further encoding layer, as any unauthorized modification may alter the embedded marks, facilitating detection of tampering.

In some aspects, the encoded data stream can be transmitted to external devices along with a timestamp via a streaming protocol, enabling secure real-time distribution of authenticated content. Some aspects include employing a computational model, such as an artificial intelligence (AI)-based model, to perform the segmenting, the encoding, or both, allowing the system to adaptively select optimal segmentation parameters and encoding strategies based on characteristics of the incoming data. In some aspects, the processing circuit and associated modules may reside within the capture device itself, so that encoding occurs at the point of capture before any data is transmitted over a network, which can minimize a window during which the data could be intercepted or manipulated. While the following description references video and audio data streams by way of example, aspects described herein are not limited to any particular type of data stream, capture device, or encoding technique and is broadly applicable wherever the integrity and provenance of a captured data stream are to be preserved.

### Building Security System

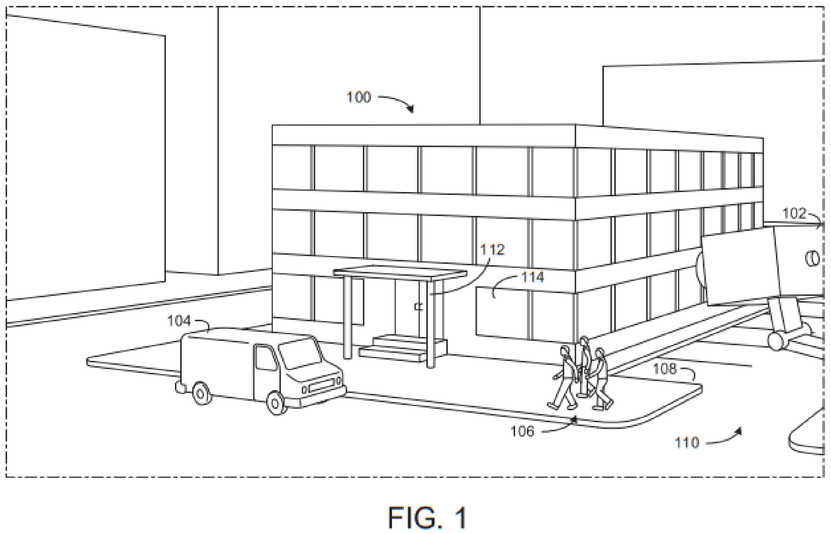

Referring now to FIG. 1, a building 100 with a security camera 102 and a parking lot 110 is shown, according to an exemplary embodiment. The building 100 is a multi-story commercial building surrounded by, or near, the parking lot 110 but can be any type of building in some embodiments. The building 100 may be a school, a hospital, a store, a place of business, a residence, a hotel, an office building, an apartment complex, etc. The building 100 can be associated with the parking lot 110.

Both the building 100 and the parking lot 110 are at least partially in the field of view of the security camera 102. In some embodiments, multiple security cameras 102 may be used to capture the entire building 100 and parking lot 110 not in (or in to create multiple angles of overlapping or the same field of view) the field of view of a single security camera 102. The parking lot 110 can be used by one or more vehicles 104 where the vehicles 104 can be either stationary or moving (e.g. busses, cars, trucks, delivery vehicles). The building 100 and parking lot 110 can be further used by one or more pedestrians 106 who can traverse the parking lot 110 and/or enter and/or exit the building 100. The building 100 may be further surrounded, or partially surrounded, by a sidewalk 108 to facilitate the foot traffic of one or more pedestrians 106, facilitate deliveries, etc. In other embodiments, the building 100 may be one of many buildings belonging to a single industrial park, shopping mall, or commercial park having a common parking lot and security camera 102. In another embodiment, the building 100 may be a residential building or multiple residential buildings that share a common roadway or parking lot.

The building 100 is shown to include a door 112 and multiple windows 114. An access control system can be implemented within the building 100 to secure these potential entrance ways of the building 100. For example, badge readers can be positioned outside the door 112 to restrict access to the building 100. The pedestrians 106 can each be associated with access badges that they can utilize with the access control system to gain access to the building 100 through the door 112. Furthermore, other interior doors within the building 100 can include access readers. In some embodiments, the doors are secured through biometric information, e.g., facial recognition, fingerprint scanners, etc. The access control system can generate events, e.g., an indication that a particular user or particular badge has interacted with the door. Furthermore, if the door 112 is forced open, the access control system, via door sensor, can detect the door forced open (DFO) event.

The windows 114 can be secured by the access control system via burglar alarm sensors. These sensors can be configured to measure vibrations associated with the window 114. If vibration patterns or levels of vibrations are sensed by the sensors of the window 114, a burglar alarm can be generated by the access control system for the window 114.

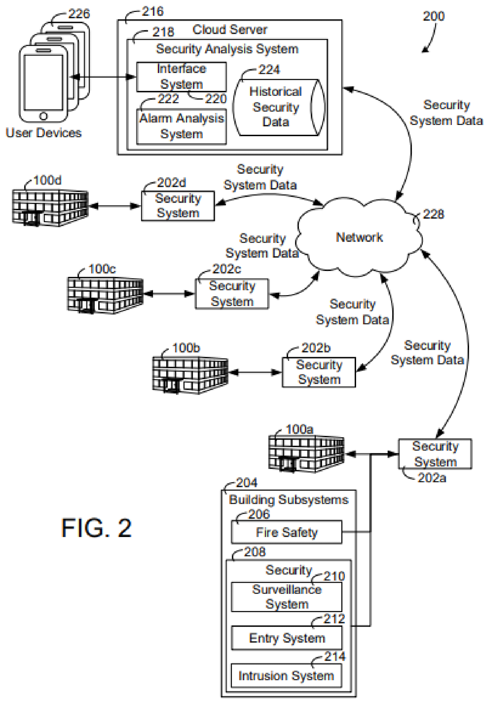

Referring now to FIG. 2, a security system 200 is shown for multiple buildings, according to an exemplary embodiment. The security system 200 is shown to include buildings 100a-100d. Each of buildings 100a-100d is shown to be associated with a security system 202a-202d. The buildings 100a-100d may be the same as and/or similar to building 100 as described with reference to FIG. 1. The security systems 202a-202d may be one or more controllers, servers, and/or computers located in a security panel or part of a central computing system for a building.

The security systems 202a-202d may communicate with, or include, various security sensors and/or actuators, building subsystems 204. For example, fire safety subsystems 206 may include various smoke sensors and alarm devices, carbon monoxide sensors, alarm devices, etc. Security subsystems 208 are shown to include a surveillance system 210, an entry system 212, and an intrusion system 214. The surveillance system 210 may include various video cameras, still image cameras, and image and/or video processing systems for monitoring various rooms, hallways, parking lots, the exterior of a building, the roof of the building, etc. The entry system 212 can include one or more systems configured to allow users to enter and exit the building (e.g., door sensors, turnstiles, gated entries, badge systems, etc.). The intrusion system 214 may include one or more sensors configured to identify whether a window or door has been forced open. The intrusion system 214 can include a keypad module for arming and/or disarming a security system and various motion sensors (e.g., IR, PIR, etc.) configured to detect motion in various zones of the building 100a.

Each of buildings 100a-100d may be located in various cities, states, and/or countries across the world. There may be any number of buildings 100a-100d. The buildings 100a-100d may be owned and operated by one or more entities. For example, a grocery store entity may own and operate buildings 100a-100d in a particular geographic state. The security systems 202a-202d may record data from the building subsystems 204 and communicate collected security system data to the cloud server 216 via network 228.

In some embodiments, the network 228 communicatively couples the devices, systems, and servers of the system 200. In some embodiments, the network 228 is at least one of and/or a combination of a Wi-Fi network, a wired Ethernet network, a ZigBee network, a Bluetooth network, and/or any other wireless network. The network 228 may be a local area network and/or a wide area network (e.g., the Internet, a building WAN, etc.) and may use a variety of communications protocols (e.g., BACnet, IP, LON, etc.). The network 228 may include routers, modems, and/or network switches. The network 228 may be a combination of wired and wireless networks.

The cloud server 216 is shown to include a security analysis system 218 that receives the security system data from the security systems 202a-202d of the buildings 100a-100d. The cloud server 216 may include one or more processing circuits (e.g., memory devices, processors, databases) configured to perform the various functionalities described herein. The cloud server 216 may be a private server.

A processing circuit of the cloud server 216 can include one or more processors and memory devices. The processor can be a general purpose or specific purpose processor, an application specific integrated circuit (ASIC), one or more field programmable gate arrays (FPGAs), a group of processing components, or other suitable processing components. The processor may be configured to execute computer code and/or instructions stored in a memory or received from other computer readable media (e.g., CDROM, network storage, a remote server, etc.).

The memory can include one or more devices (e.g., memory units, memory devices, storage devices, etc.) for storing data and/or computer code for completing and/or facilitating the various processes described in the present disclosure. The memory can include random access memory (RAM), read-only memory (ROM), hard drive storage, temporary storage, non-volatile memory, flash memory, optical memory, or any other suitable memory for storing software objects and/or computer instructions. The memory can include database components, object code components, script components, or any other type of information structure for supporting the various activities and information structures described in the present disclosure. The memory can be communicably connected to the processor via the processing circuit and can include computer code for executing (e.g., by the processor) one or more processes described herein.

In some embodiments, the cloud server 216 can be located on premises within one of the buildings 100a-100d. For example, a user may wish that their security, fire, or HVAC data remain confidential and have a lower risk of being compromised. In such an instance, the cloud server 216 may be located on-premises instead of within an off-premises cloud platform.

The security analysis system 218 may implement an interface system 220, an alarm analysis system 222, and a database storing historical security data 224, security system data collected from the security systems 202a-202d. The interface system 220 may provide various interfaces of user devices 226 for monitoring and/or controlling the security systems 202a-202d of the buildings 100a-100d. The interfaces may include various maps, alarm information, maintenance ordering systems, etc. The historical security data 224 can be aggregated security alarm and/or event data collected via the network 228 from the buildings 100a-100d. The alarm analysis system 222 can be configured to analyze the aggregated data to identify insights, detect alarms, reduce false alarms, etc. The analysis results of the alarm analysis system 222 can be provided to a user via the interface system 220. In some embodiments, the results of the analysis performed by the alarm analysis system 222 are provided as control actions to the security systems 202a-202d via the network 228.

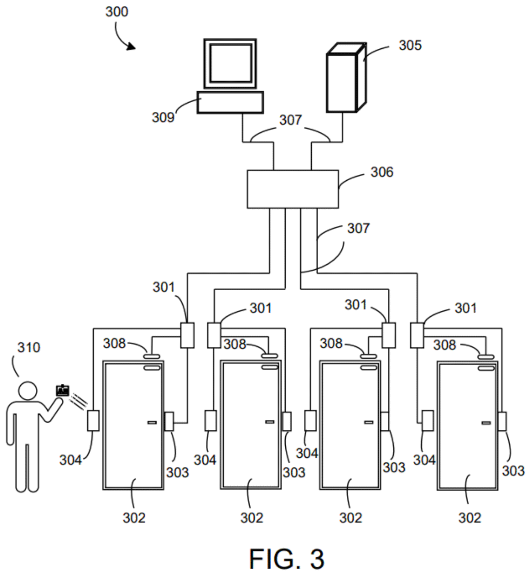

Referring now to FIG. 3, a block diagram of an ACS 300 is shown, according to an exemplary embodiment. The ACS 300 can be implemented in any of the buildings 100a-100d as described with reference to FIG. 2. The ACS 300 is shown to include a plurality of doors 302. Each of the doors 302 is associated with a door lock 303, an access reader module 304, and one or more door sensors 308. The door locks 303, the access reader modules 304, and the door sensors 308 may be connected to access controllers 301. The access controllers 301 may be connected to a network switch 306 that directs signals, according to the configuration of the ACS 300, through network connections 307 (e.g., physical wires or wireless communications links) interconnecting the access controllers 301 to an ACS server 305 (e.g., the cloud server 216). The ACS server 305 may be connected to an end-user terminal or interface 309 through network switch 306 and the network connections 307.

The ACS 300 can be configured to grant or deny access to a controlled or secured area. For example, a person 310 may approach the access reader module 304 and present credentials, such as an access card. The access reader module 304 may read the access card to identify a card ID or user ID associated with the access card. The card ID or user ID may be sent from the access reader module 304 to the access controller 301, which determines whether to unlock the door lock 303 or open the door 302 based on whether the person 310 associated with the card ID or user ID has permission to access the controlled or secured area.

### Data encryption

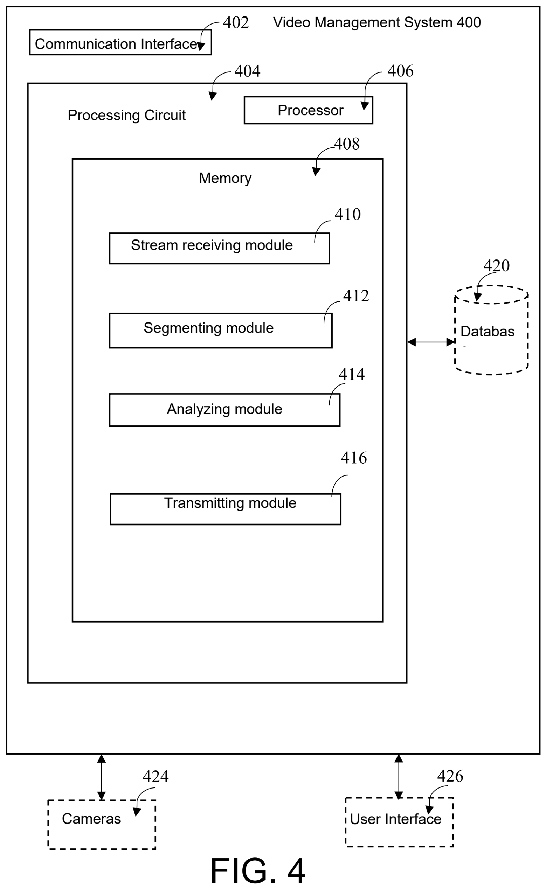

Referring to FIG. 4, a video management system 400 is shown according to some embodiments of the present disclosure. In accordance with aspects described herein, the video management system 400 can receive a data stream captured by a camera, segment the data stream into one or more data frames, and/or encode the one or more data frames using one or more encoding techniques to generate an encoded data stream. The encoded data stream can include one or more identifiers, such that tampering or deepfake generation causes detectable alteration of the one or more identifiers (e.g., any change in the identifier values, one or more missing identifiers, etc.). In this manner, the video management system 400 can enable reliable detection of unauthorized modifications to data streams, which may facilitate preserving data integrity and authenticity from the point of capture through transmission and downstream use. The video management system 400 is shown to include a communication interface 402 and a processing circuit 404. Communication interface 402 may include wired or wireless interfaces (e.g., jacks, antennas, transmitters, receivers, transceivers, wire terminals, etc.) for conducting data communications with various systems, devices, or networks. For example, communication interface 402 may include an Ethernet card and port for sending and receiving data via an Ethernet-based communications network and/or a Wi-Fi transceiver for communicating via a wireless communications network. Communication interface 402 may be configured to communicate via local area networks or wide area networks (e.g., the Internet, a building WAN, etc.) and may use a variety of communication protocols (e.g., BACnet, IP, LON, etc.).

Communication interface 402 may be a network interface configured to facilitate electronic data communications between the video management system 400 and various external systems or devices (e.g., one or more cameras 424, user interface 426 etc.).

The processing circuit 404 is shown to include a processor 406 and a memory 408. The processor 406 may be a general purpose or specific purpose processor, an application specific integrated circuit (ASIC), one or more field programmable gate arrays (FPGAs), a group of processing components, or other suitable process modeling components. The processor 406 may be configured to execute computer code or instructions stored in memory 408 or received from other computer readable media (e.g., CDROM, network storage, a remote server, etc.).

The memory 408 may include one or more devices (e.g., memory units, memory devices, storage devices, etc.) for storing data and/or computer code for completing and/or facilitating the various processes described in the present disclosure. The memory 408 may include random access memory (RAM), read-only memory (ROM), hard drive storage, temporary storage, non-volatile memory, flash memory, optical memory, or any other suitable memory for storing software objects and/or computer instructions. The memory 408 may include database components, object code components, script components, modules or any other type of information structure for supporting various activities and information structures described in the present disclosure. The memory 408 may be communicably connected to the processor 406 via the processing circuit 404 and may include computer code for executing (e.g., by processor 406) one or more processes described herein.

The video management system 400 may receive one or more data streams from the one or more cameras 424, in accordance with aspects described herein. The cameras 424 can be red, green, blue (RGB) cameras, infrared cameras, depth cameras, PTZ cameras etc. The cameras 424 may be an edge camera. The cameras 424 capture data streams (video data, audio data, and/or associated metadata) and transmit the captured data streams to the video management system 400 via the communication interface 402.

The video management system 400 is communicatively coupled to the user interface 426 (e.g., via the communication interface 402) that can access the data streams as captured by the cameras 424 for playback on the user interface 426. The user interface 426 may include a display for displaying playback of the data streams.

In some embodiments, the user interface 426 may be implemented using an electronic device associated with a user that can be selected from, but not limited to, wearable devices (e.g., optical head-mounted display, smartwatch, etc.), smartphones and/or mobile devices, desktop, computer, laptop and netbook computing devices, tablet computing devices, digital media devices, personal digital assistant (PDA) and any other device having communication and/or processing capabilities. In some embodiments, the user interface 426 may be associated with a user such as an admin of the building space.

The video management system 400 is shown to include a stream receiving module 410. In one aspect, the stream receiving module 410 may communicate with the one or more cameras 424 via the communication interface 402 to receive one or more data streams from the one or more cameras 424. In another aspect, the stream receiving module 410 may receive individual data frames pertaining to the data streams from the cameras 424. In some embodiments, the stream receiving module 410 may receive timestamped data streams from the cameras 424.

The video management system 400 is further shown to include a segmenting module 412 that may communicate with the stream receiving module 410 to receive the data streams. Further, the segmenting module 412 may be configured to segment the data stream into one or more data frames. In some embodiments, the segmenting module 412 may segment the data stream into data frames based on one or more predefined rules stored in the database 420. For example, the one or more predefined rules may indicate information such as number of data frames that the data stream is to be segmented into, time intervals of each data frames, format of the data frames, removal of any duplicate data frames having overlapping content, etc. In some aspects, the predefined rules may be set automatically by the video management system 400 based on analysis of the data stream. Alternatively, the predefined rules may be set by a user such as an admin of the video management system 400 via the user interface 426. In other embodiments, the segmenting module 412 may utilize an AI based model to segment the data stream into data frames.

In some embodiments, the segmenting module 412 may perform one or more preprocessing operations and further segment the data stream into one or more sections such as audio data, video data, and metadata associated with the data stream.

Further, the video management system 400 is shown to include an analyzing module 414. The analyzing module 414 may communicate with the segmenting module 412 to receive the data frames from the segmenting module 412. In an alternate scenario, the segmenting module 412 may not be required as a part of the video management system 400 and the analyzing module 414 may directly communicate with the stream receiving module 410 to receive entire data stream from the stream receiving module 410. Further, the analyzing module 414 may be configured to analyze the data frames to perform one or more encoding operations. The data frames may be encoded by inclusion of one or more identifiers. The one or more identifiers tend to alter in an event when the one or more data frames of the data stream is tampered or doctored or a deepfake data stream is generated from the encoded data stream. In some embodiments, the encoded data stream may prevent manipulation of the data stream thereby preventing generation of deepfake data streams.

In some embodiments, the analyzing module 414 may utilize one or more encoding techniques pre-stored in the database 420 to encode the data stream. Alternatively, the analyzing module 414 may utilize the AI based model to perform encoding of the data stream.

For example, the one or more encoding techniques may comprise adding an encoded message to the data stream. The encoded message may comprise the one or more identifiers pertaining to origin (such as camera ID, camera model, camera IP address, MAC address, camera firmware version, GPS information etc.), chain of custody, metadata of the data stream (such as timestamps pertaining to the data stream showing time of capture of the data stream, pixel information, name of the data stream (file), size of the data stream, extension of the data stream etc.) In some embodiments, the analyzing module 414 may add the encoded message to the entire data stream. Alternatively, if the data stream is segmented into multiple data frames, then the encoded message may be added individually to all the data frames or to one or more selected data frames. The analyzing module 414 may determine an optimal position for adding the encoded message to the data stream by utilizing one or more pre-defined encoding rules stored in the database 420 or alternatively based on the AI based model. The encoded message may be added such that it is difficult to remove the encoded message from the data stream during any attempt of altering the data stream by an unauthorized individual and also helps in traceability of origin of the data stream. In some aspects, the encoded message may be added to support data streams having different kinds of format such as MPEG, RTSP etc.

In another example, the one or more encoding techniques may comprise inserting an entire intra-coded data frame into the data stream. The intra-coded data frame may comprise one or more identifiers pertaining to the origin (such as camera ID, camera model, camera IP address, MAC address, camera firmware version, GPS information etc.), chain of custody, metadata of the data stream (such as timestamps pertaining to the data stream showing time of capture of the data stream, pixel information, name of the data stream (file), size of the data stream, extension of the data stream etc.). The analyzing module 414 may determine an optimal position for inserting the intra-coded data frame to the data stream by utilizing the pre-defined encoding rules stored in the database 420 or alternatively based on the AI based model. Addition of the intra-coded data frame having the one or more identifiers makes it difficult to manipulate the data stream as the intra-coded data frame is difficult to remove from the data stream.

In another example, the one or more encoding techniques may comprise computing a hash value for each of the one or more data frames. The hash value may indicate a unique numerical value that acts as a fingerprint to identify the data frame. The analyzing module 414 may utilize one or more cryptographic algorithms (such as pre-stored in the database 420) to compute the hash values or alternatively utilize the AI based model to compute the hash value.

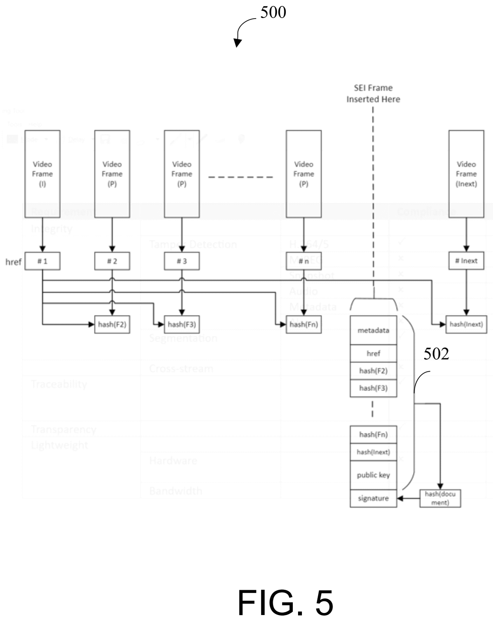

In another example, the analyzing module 414 may utilize a frame based approach for performing data encryption to support various frame formats. FIG. 5 illustrates an example of a frame-based approach to perform data encryption, in accordance with aspects described herein. FIG. 5 illustrates multiple frames 500 of a data stream. The frame based approach allows segmentation of the data stream without losing integrity by inserting an encoded frame 502 into the data stream of multiple frames 500 at a certain position. The encoded frame may comprise one or more identifiers including a public key, signature, hash values, metadata (such as serial number, device type pertaining to the device that captured the data stream etc.). Such encoded frame can be transparent to decoders and indicates that all the information required to verify the data stream is present in the data stream itself in form of the encoded frame. The analyzing module 414 can select the position for the encoded frame based on one or more considerations, such as a periodicity configured for inserting encoded frames in the data stream, a number of encoded frames to be inserted in the data stream, etc.

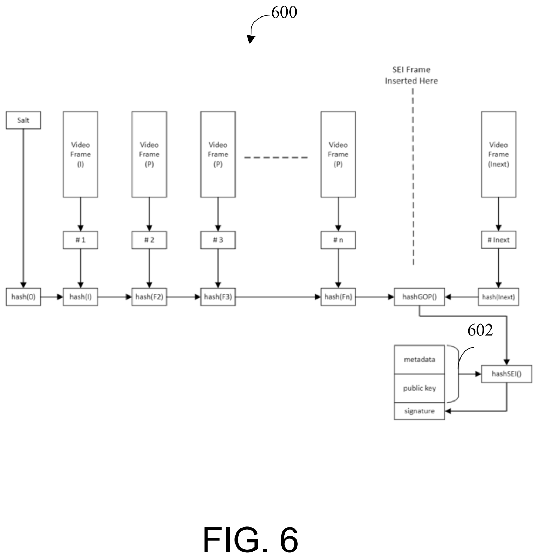

In another example, the analyzing module 414 may utilize a GOP (Group-of-Pictures) based approach for performing data encryption for supporting various frame formats. FIG. 6 illustrates an example of a GOP based approach, in accordance with aspects described herein. The GOP based approach allows insertion of an encoded frame at a different position from the frame based approach, described in FIG. 5, into the data stream. In the GOP based approach, the data stream can be segmented into multiple frames 600, and the encoded frame 602 can be inserted at a position within the multiple frames 600. The encoded frame may comprise one or more identifiers including a public key, signature, hash values, metadata (such as serial number, device type pertaining to the device that captured the data stream etc.). The analyzing module 414 can select the position for the encoded frame based on one or more considerations, such as a periodicity configured for inserting encoded frames in the data stream, a number of encoded frames to be inserted in the data stream, etc. In an example, the analyzing module 414 leverages inherent group-of-pictures structure of video encoding to support data integrity verification across different frame formats. Because the GOP-based approach accounts for the relationships between data frames within a group of pictures, the encoding can operate at a structural level of the data stream, which may be more resistant to manipulation techniques that target individual frames while preserving the ability to detect any alteration to the one or more identifiers caused by tampering or deepfake generation.

In another example, the one or more encoding techniques may comprise combining the above frame-based approach, as illustrated in FIG. 5, and GOP-based approach, as illustrated in FIG. 6, by hashing all the hashes. The analyzing module 414 may associate a hash value of each data frame to a hash value of its preceding frame. Such association creates a continuity between the data frames that prevents tampering of the data stream.

In another example, the analyzing module 414 may receive the one or more bundles/sections of the data stream (as referred above) such as audio data, video data, metadata. In such scenario, the analyzing module 414 may compute a hash value for each of the one or more sections i.e., the audio data, video data, and metadata individually. The analyzing module 414 may also add a custom RTP (Real-time Transport Protocol) extension to the audio data to achieve individual audio data encoding. Also, during validation of the data stream by authorized personnel, each of the sections of the data stream i.e., audio data, video data, metadata may be separately verified. Correlation of hash values and timestamps across all the sections may ensure integrity and address scenarios where audio data and video data may be out of sync and diverge due to tampering. For example, as referred in the background for time-shifted audio (where someone's back is turned, but their voice says something different).

In another example, the one or more encoding techniques may comprise generating a frame representing a summation of the data stream. The analyzing module 414 may create and insert the frame into the data stream at an optimal position by utilizing the pre-stored encoding rules or alternatively the AI based model. The frame remains with the data stream and prevents tampering of the data stream. Also, the frame helps authorized individuals to verify authenticity of the data stream by providing a summation of the data stream to track if any content from the data stream is lost or altered.

In another example, the analyzing module 414 may associate metadata while taking snapshots from the data stream. Additionally, the analyzing module 414 may utilize other encoding techniques such as watermarking, steganography etc., to provide an additional layer of security to the data stream as unauthorized modifications to the data stream may alter the watermarks (i.e., identifiers) associated with the data stream, thereby facilitating detection of the unauthorized activity. As used herein, watermarking can include a technique for embedding perceptible or imperceptible information into a data stream, such as by modifying pixel values, frequency-domain coefficients, or signal characteristics, such that the embedded information persists through normal processing but is altered or destroyed by unauthorized modifications. As used herein, steganography can include a technique for concealing information within a data stream in a manner that is not readily detectable by an observer, including hiding data within image pixels, audio samples, video frames, or other data components. Unauthorized modifications to the data stream may alter the watermarks, which serve as identifiers associated with the data stream, thereby facilitating detection of the unauthorized activity. In an embodiment, watermarking can embed information using sensor noise or modify DCT coefficients. As used herein, DCT coefficients can refer to the frequency-domain values resulting from applying a discrete cosine transform to data, such as image blocks or audio samples, and modification of these coefficients can provide a mechanism for embedding watermark information that is robust against common processing operations. Because deepfake modifications may alter the watermark therefore, any alternation to the watermark results in detection of Deepfake video or data.

Subsequent to applying the one or more encoding techniques, the analyzing module 414 may generate an encoded data stream by compiling the multiple data frames. In some embodiments, the analyzing module 414 may store the encoded data stream internally in the database 420.

The video management system 400 is further shown to include a transmitting module 416. As used herein, a transmitting module can include a hardware component, software module, firmware routine, or combination thereof that is configured to output, send, or otherwise deliver data to one or more external devices or systems using any suitable communication protocol or medium. The transmitting module 416 may be configured to communicate with the analyzing module 414 to receive the encoded data stream. Further, the transmitting module 416 may be configured to transmit the encoded data stream to one or more external devices. In some aspects, the transmitting module 416 may transmit the encoded data stream along with a timestamp to one or more external devices. As used herein, external devices can include a computing device, storage system, server, cloud platform, monitoring station, mobile device, or other system that is separate from the video management system 400 and is configured to receive, store, process, or display the encoded data stream. As used herein, a timestamp can refer to a temporal indicator, time value, or time-related data element that records or indicates a particular point in time or time interval associated with the data stream, a data frame, or a transmission event. Also, in some embodiments, the transmitting module 416 may utilize an optimal streaming protocol such as Live Streaming Protocol (LSP) to transmit the encoded data stream to external devices.

In some embodiments, the cameras 424 may be highly advanced specialized cameras that are independently capable of implementing video encoding techniques within the cameras 424 through the processing circuit 404 without relying on the video management system 400. In such scenario (not shown), the processing circuit 404 may be a part of the cameras 424. The processing circuit 404 may comprise the processor 406 and the memory 408 along with the one or more modules such as the stream receiving module 410, the segmenting module 412, the analyzing module 414 and the transmitting module 416 (referred above in FIG. 4). Functions of all the modules have already been described above in FIG. 4. Through these modules, the cameras 424 possess the capability to independently perform the above mentioned one or more encoding techniques in the similar manner as performed by the video management system 400.

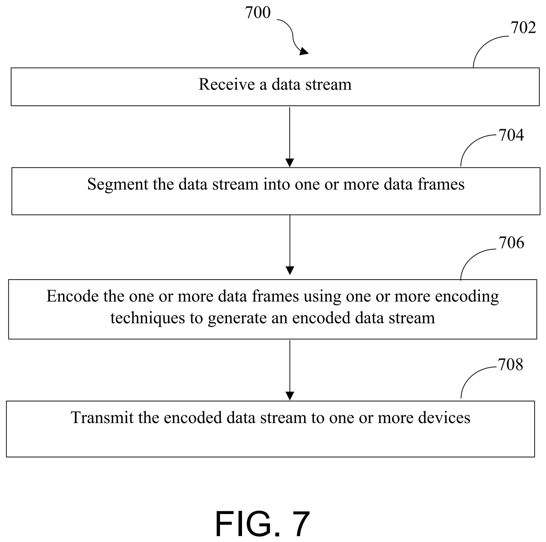

Referring now to FIG. 7, a flow chart of a method 700 for performing data encryption is shown, according to some embodiments. In some embodiments, the method 700 is performed by the video management system 400 (referred above in FIG. 4). Alternatively, the method 700 may be partially or completely performed by the cameras 424 (referred above in FIG. 4) or another computing system or controller of BMS.

At block 702, the method 700 can include receiving, by a processing circuit, a data stream captured by a camera. For example, the processing circuit 404 of the video management system 400, via the stream receiving module 410, may receive the data stream from one or more cameras 424 through the communication interface 402, as described in greater detail with reference to FIG. 4. In some aspects, the video management system 400, via the stream receiving module 410, may receive individual data frames pertaining to the data streams from the cameras 424. In some embodiments, the video management system 400, via the stream receiving module 410, may receive timestamped data streams from the cameras 424 showing timestamps of capturing of the data streams by cameras 424. Receiving the data stream can provide the input for subsequent processing and encoding operations that protect against tampering or unauthorized modification of the data stream.

At block 704, the method 700 can include segmenting, by the processing circuit, the data stream into one or more data frames. For example, the processing circuit 404, via the segmenting module 412 of the video management system 400, may segment the data stream into the one or more data frames based on one or more predefined rules stored in the database 420, as described in greater detail with reference to FIG. 4. For example, the one or more predefined rules may indicate information such as number of data frames that the data stream is to be segmented into, time intervals of each data frames, format of the data frames, removal of any duplicate data frames having overlapping content etc. The segmentation can divide the data stream into discrete data frames to facilitate per-frame encoding and analysis. Alternatively, an AI based model may be utilized (e.g., by the processing circuit 404, via the segmenting module 412 of the video management system 400) to segment the data stream into data frames. In some embodiments, the data stream may be segmented into one or more sections such as audio data, video data, and metadata associated with the data stream. Segmenting the data stream can enable the encoding techniques applied in subsequent operations to be targeted at individual frames, enhancing the granularity and robustness of the encoding and, as a result, improving the capability for detecting tampering or deepfake generation.

At block 706, the method 700 can include encoding, by the processing circuit, the one or more data frames using one or more encoding techniques to generate an encoded data stream, the encoded data stream comprising one or more identifiers, such that tampering or deepfake generation causes detectable alteration of the one or more identifiers. For example, the processing circuit 404, via the analyzing module 414 of the video management system 400, may encode the one or more data frames using one or more encoding techniques stored in the database 420 or through an artificial intelligence-based model, as described in greater detail with reference to FIG. 4. Additional details regarding frame-based and group-of-pictures-based encoding approaches are described with reference to FIGs. 5 and 6, respectively.

The encoding can embed one or more identifiers into the data stream that serve as markers of authenticity and integrity. In some embodiments, the one or more identifiers are associated with at least one of an origin of the data stream, a chain of custody of the data stream, or metadata of the data stream. The origin of the data stream may comprise at least one of a camera identifier, a camera model, a camera internet protocol address, a media access control address, a camera firmware version, or global positioning system information associated with the camera. The metadata of the data stream may comprise at least one of a timestamp indicating a time of capture of the data stream, pixel information of the data stream, a file name of the data stream, a size of the data stream, or a format extension of the data stream.

For example, the one or more encoding techniques may comprise adding an encoded message including the one or more identifiers to the data stream or to each of the one or more data frames. The encoded message may comprise one or more identifiers pertaining to origin (such as camera ID, camera model, camera IP address, MAC address, camera firmware version, GPS information etc.), chain of custody, metadata of the data stream (such as timestamps pertaining to the data stream showing time of capture of the data stream, pixel information, name of the data stream (file), size of the data stream, extension of the data stream etc.) In some embodiments, the encoded message may be added to the entire data stream or individually to all the data frames or to one or more selected data frames. In some aspects, the encoded message may be added to support data streams having different kinds of format such as MPEG, RTSP etc. The encoded data stream contains the one or more identifiers that alter in an event if a deepfake data stream if generated from the encoded data stream, thereby aiding deepfake detection.

In another example, the one or more encoding techniques may comprise inserting an entire intra-coded data frame into the data stream at an optimal position. The intra-coded data frame may comprise one or more identifiers pertaining to the camera ID, camera IP address, MAC address, camera firmware version, metadata pertaining to origin (such as camera ID, camera model, camera IP address, MAC address, camera firmware version, GPS information etc.), chain of custody, metadata of the data stream (such as timestamps pertaining to the data stream showing time of capture of the data stream, pixel information, name of the data stream (file), size of the data stream, extension of the data stream etc.).

In another example, the one or more encoding techniques may comprise computing a hash value for each of the one or more data frames. The hash value may indicate a unique numerical value that acts as a fingerprint to identify the data frame. The hash value may be computed using one or more cryptographic algorithms (such as pre-stored in the database 420) or alternatively by utilizing the AI based model.

In another example, the encoding techniques may comprise combining the above frame-based approach, e.g., as described with reference to FIG. 5, and GOP-based approach, e.g., as described with reference to FIG. 6, by hashing all the hashes. Further, a hash value of each data frame may be associated to a hash value of its preceding frame to create a continuity between the data frames.

In another example, the encoding techniques may comprise computing a hash value for each of the one or more sections of the data stream i.e., the audio data, video data, and metadata such that during validation of the data stream by authorized personnel, each of the sections of the data stream may be separately verified.

In another example, the one or more encoding techniques may comprise generating a frame representing a summation of the data stream. The frame may be inserted by at an optimal position by utilizing the pre-stored encoding rules or alternatively the AI based model.

In another example, the one or more encoding techniques may comprise associating metadata while taking snapshots from the data stream. Additionally, other encoding techniques such as Watermarking, Steganography etc., may be utilized for encoding the data stream such that any unauthorized modifications to the data stream may alter the watermarks (i.e., identifiers) associated with the data stream, thereby facilitating detection of the unauthorized activity.

Subsequent to applying the one or more encoding techniques, an encoded data stream may be generated by compiling the multiple data frames.

By embedding identifiers through these encoding techniques, aspects described herein can facilitate both deepfake detection and compliance detection, as unauthorized modifications to the data stream cause detectable alterations of the embedded identifiers that can be verified by downstream systems or authorized personnel. For example, because the one or more identifiers are embedded throughout the encoded data stream and are associated with the origin, chain of custody, and metadata of the data stream, any attempt to tamper with, doctor, or generate a deepfake version of the data stream results in a detectable alteration of one or more of these identifiers. This detectable alteration can enable compliance detection by allowing authorized systems or personnel to verify the integrity and authenticity of the data stream against the originally encoded identifiers and to identify whether the data stream remains in compliance with its original captured state.

At block 708, the method 700 can include transmitting, by the processing circuit, the encoded data stream to one or more external devices. For example, the processing circuit 404, via the transmitting module 416 of the video management system 400, may transmit the encoded data stream to the one or more external devices through the communication interface 402, as described in greater detail with reference to FIG. 4.

The encoded data stream may be transmitted along with a timestamp to the one or more external devices, providing a temporal record that supports verification of the timing and sequence of the data stream. In some embodiments, transmitting the encoded data stream includes utilizing a live streaming protocol to facilitate real-time delivery of the encoded data stream. The one or more identifiers embedded during encoding at block 706 can persist within the transmitted encoded data stream, enabling downstream recipients or compliance detection systems to verify the authenticity and integrity of the data stream and to detect whether the data stream has been subjected to tampering or deepfake generation.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also, two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

Further embodiments or example aspects of the present invention may be summarized as follows. Any of these embodiments can be claimed in a separate claim, e.g. by substituting the word "Aspect" by "Claim", in particular in the order as mentioned below and/or in any combination with any embodiment described above or with any of the features of the attached claims.

Aspect 1 is a method that includes receiving, by a processing circuit, a data stream captured by a camera, segmenting, by the processing circuit, the data stream into one or more data frames, and encoding, by the processing circuit, the one or more data frames using one or more encoding techniques to generate an encoded data stream, the encoded data stream comprising one or more identifiers, such that tampering or deepfake generation causes detectable alteration of the one or more identifiers.

In Aspect 2, the method of Aspect 1 includes where the one or more identifiers are associated with at least one of an origin of the data stream, a chain of custody of the data stream, or metadata of the data stream.

In Aspect 3, the method of Aspect 2 includes where the origin of the data stream comprises at least one of a camera identifier, a camera model, a camera internet protocol address, a media access control address, a camera firmware version, or global positioning system information associated with the camera.

In Aspect 4, the method of any of Aspects 2 or 3 includes where the metadata of the data stream comprises at least one of a timestamp indicating a time of capture of the data stream, pixel information of the data stream, a file name of the data stream, a size of the data stream, or a format extension of the data stream.

In Aspect 5, the method of any of Aspects 1 to 4 includes where the one or more encoding techniques include adding an encoded message to the data stream, the encoded message comprising the one or more identifiers.

In Aspect 6, the method of Aspect 5 includes where the encoding includes adding the encoded message to each of the one or more data frames.

In Aspect 7, the method of any of Aspects 1 to 6 includes where the one or more encoding techniques includes computing a hash value for each of the one or more data frames.

In Aspect 8, the method of Aspect 7 includes where computing the hash value includes associating the hash value of a given data frame of the one or more data frames with a hash value of a data frame preceding the given data frame in the data stream.

In Aspect 9, the method of any of Aspects 1 to 8 includes where the one or more encoding techniques includes inserting an encoded frame into the data stream according to a frame-based encoding approach, the encoded frame being transparent to decoders.

In Aspect 10, the method of Aspect 9 includes where the encoded frame includes at least one of a public key, a digital signature, a hash value, or device metadata associated with a device that captured the data stream.

In Aspect 11, the method of any of Aspects 9 or 10 includes where inserting the encoded frame includes inserting the encoded frame into the data stream according to a group-of-pictures-based encoding.

In Aspect 12, the method of any of Aspects 1 to 11 includes where the encoding includes adding a real-time transport protocol extension to at least an audio data portion of the one or more data frames.

In Aspect 13, the method of any of Aspects 1 to 12 includes where the one or more encoding techniques includes applying at least one of watermarking or steganography to the data stream.

In Aspect 14, the method of any of Aspects 1 to 13 includes where the one or more encoding techniques includes generating a summation frame representing a summation of the data stream, and inserting the summation frame into the data stream at a position determined by one or more encoding rules.

In Aspect 15, the method of any of Aspects 1 to 14 includes transmitting, by the processing circuit, the encoded data stream to one or more external devices.

In Aspect 16, the method of Aspect 15 includes where transmitting the encoded data stream includes transmitting the encoded data stream along with a timestamp to the one or more external devices.

In Aspect 17, the method of any of Aspects 15 or 16 includes where transmitting the encoded data stream includes utilizing a live streaming protocol.

In Aspect 18, the method of any of Aspects 1 to 17 includes where at least one of the segmenting or the encoding is performed using an artificial intelligence-based model.

Aspect 19 is an apparatus including one or more processors, one or more memories coupled with the one or more processors, and instructions stored in the one or more memories and operable, when executed by the one or more processors, to cause the apparatus to perform any of the methods of Aspects 1 to 18.

Aspect 20 is an apparatus including means for performing any of the methods of Aspects 1 to 18.

Aspect 21 is one or more computer-readable media including code executable by one or more processors, the code including code for performing any of the methods of Aspects 1 to 18.

Aspect 22: A system comprising: one or more memories; and one or more processing circuits coupled with the one or more memories and configured to cause the system to: receive a data stream captured by a camera; segment the data stream into one or more data frames; and encode the one or more data frames using one or more encoding techniques to generate an encoded data stream, the encoded data stream comprising one or more identifiers, such that tampering or deepfake generation causes detectable alteration of the one or more identifiers.

Aspect 23: The system of Aspect 22, wherein the one or more identifiers are associated with at least one of an origin of the data stream, a chain of custody of the data stream, or metadata of the data stream.

Aspect 24: The system of Aspect 23, wherein the origin of the data stream comprises at least one of a camera identifier, a camera model, a camera internet protocol address, a media access control address, a camera firmware version, or global positioning system information associated with the camera.

Aspect 25: The system of Aspect 23 or 24, wherein the metadata of the data stream comprises at least one of a timestamp indicating a time of capture of the data stream, pixel information of the data stream, a file name of the data stream, a size of the data stream, or a format extension of the data stream.

Aspect 26: The system of any of Aspects 22 to 25, wherein the one or more encoding techniques include adding an encoded message to the data stream, the encoded message comprising the one or more identifiers.

Aspect 27: The system of Aspect 26, wherein the one or more processing circuits are configured to cause the system to encode the one or more data frames including adding the encoded message to each of the one or more data frames.

Aspect 28: The system of any of Aspects 22 to 27, wherein the one or more encoding techniques includes computing a hash value for each of the one or more data frames.

Aspect 29: The system of Aspect 28, wherein the one or more processing circuits are configured to cause the system to compute the hash value including associating the hash value of a given data frame of the one or more data frames with a hash value of a data frame preceding the given data frame in the data stream.

Aspect 30: The system of any of Aspects 22 to 29, wherein the one or more encoding techniques includes inserting an encoded frame into the data stream according to a frame-based encoding approach, the encoded frame being transparent to decoders.

Aspect 31: The system of Aspect 30, wherein the encoded frame includes at least one of a public key, a digital signature, a hash value, or device metadata associated with a device that captured the data stream.

Aspect 32: The system of Aspect 30 or 31, wherein inserting the encoded frame includes inserting the encoded frame into the data stream according to a group-of-pictures-based encoding.

Aspect 33: The system of any of Aspects 22 to 32, wherein the one or more processing circuits are configured to cause the system to encode the one or more data frames including adding a real-time transport protocol extension to at least an audio data portion of the one or more data frames.

Aspect 34: The system of any of Aspects 22 to 33, wherein the one or more encoding techniques includes applying at least one of watermarking or steganography to the data stream.

Aspect 35: The system of any of Aspects 22 to 34, wherein the one or more encoding techniques includes: generating a summation frame representing a summation of the data stream; and inserting the summation frame into the data stream at a position determined by one or more encoding rules.

Aspect 36: The system of any of Aspects 22 to 35, wherein the one or more processing circuits are configured to cause the system to transmit the encoded data stream to one or more external devices.

Aspect 37: The system of any of Aspects 22 to 36, wherein the one or more processing circuits are configured to cause the system to at least one of segment or encode using an artificial intelligence-based model.

Aspect 38. A method comprising: receiving, by a processing circuit, a data stream captured by a camera; segmenting, by the processing circuit, the data stream into one or more data frames; and encoding, by the processing circuit, the one or more data frames using one or more encoding techniques to generate an encoded data stream, the encoded data stream comprising one or more identifiers, such that tampering or deepfake generation causes detectable alteration of the one or more identifiers.

Aspect 39: The method of Aspect 38, wherein the one or more identifiers are associated with at least one of an origin of the data stream, a chain of custody of the data stream, or metadata of the data stream.

Aspect 40. One or more non-transitory computer-readable media comprising code for causing one or more processing circuits to perform the method according to any of Aspects 1 to 19 or 38 to 39, in particular to encode a data stream for deepfake detection, the code comprising code for: receiving a data stream captured by a camera; segmenting the data stream into one or more data frames; and encoding the one or more data frames using one or more encoding techniques to generate an encoded data stream, the encoded data stream comprising one or more identifiers, such that tampering or deepfake generation causes detectable alteration of the one or more identifiers.

Aspect 41. The one or more non-transitory computer-readable media of Aspect 40, wherein the one or more identifiers are associated with at least one of an origin of the data stream, a chain of custody of the data stream, or metadata of the data stream.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A system comprising:
one or more memories; and
one or more processing circuits coupled with the one or more memories and configured to cause the system to:
receive a data stream captured by a camera;
segment the data stream into one or more data frames; and
encode the one or more data frames using one or more encoding techniques to generate an encoded data stream, the encoded data stream comprising one or more identifiers, such that tampering or deepfake generation causes detectable alteration of the one or more identifiers.

2. The system of claim 1, wherein the one or more identifiers are associated with at least one of an origin of the data stream, a chain of custody of the data stream, or metadata of the data stream.

3. The system of claim 2, wherein the origin of the data stream comprises at least one of a camera identifier, a camera model, a camera internet protocol address, a media access control address, a camera firmware version, or global positioning system information associated with the camera.

4. The system of claim 2 or 3, wherein the metadata of the data stream comprises at least one of a timestamp indicating a time of capture of the data stream, pixel information of the data stream, a file name of the data stream, a size of the data stream, or a format extension of the data stream.

5. The system of any of claims 1 to 4, wherein the one or more encoding techniques include adding an encoded message to the data stream, the encoded message comprising the one or more identifiers;
optionally, wherein the one or more processing circuits are configured to cause the system to encode the one or more data frames including adding the encoded message to each of the one or more data frames.

6. The system of any of claims 1 to 5, wherein the one or more encoding techniques includes computing a hash value for each of the one or more data frames;
optionally, wherein the one or more processing circuits are configured to cause the system to compute the hash value including associating the hash value of a given data frame of the one or more data frames with a hash value of a data frame preceding the given data frame in the data stream.

7. The system of any of claims 1 to 6, wherein the one or more encoding techniques includes inserting an encoded frame into the data stream according to a frame-based encoding approach, the encoded frame being transparent to decoders;
optionally, wherein the encoded frame includes at least one of a public key, a digital signature, a hash value, or device metadata associated with a device that captured the data stream; or
optionally, wherein inserting the encoded frame includes inserting the encoded frame into the data stream according to a group-of-pictures-based encoding.

8. The system of any of claims 1 to 7, wherein the one or more processing circuits are configured to cause the system to encode the one or more data frames including adding a real-time transport protocol extension to at least an audio data portion of the one or more data frames.

9. The system of any of claims 1 to 8, wherein the one or more encoding techniques includes applying at least one of watermarking or steganography to the data stream.

10. The system of any of claims 1 to 9, wherein the one or more encoding techniques includes:
generating a summation frame representing a summation of the data stream; and
inserting the summation frame into the data stream at a position determined by one or more encoding rules.

11. The system of any of claims 1 to 10, wherein the one or more processing circuits are configured to cause the system to transmit the encoded data stream to one or more external devices; and/or
wherein the one or more processing circuits are configured to cause the system to at least one of segment or encode using an artificial intelligence-based model.

12. A method comprising:
receiving, by a processing circuit, a data stream captured by a camera;
segmenting, by the processing circuit, the data stream into one or more data frames; and
encoding, by the processing circuit, the one or more data frames using one or more encoding techniques to generate an encoded data stream, the encoded data stream comprising one or more identifiers, such that tampering or deepfake generation causes detectable alteration of the one or more identifiers.

13. The method of claim 12, wherein the one or more identifiers are associated with at least one of an origin of the data stream, a chain of custody of the data stream, or metadata of the data stream.

14. One or more non-transitory computer-readable media comprising code for causing one or more processing circuits to encode a data stream for deepfake detection, the code comprising code for:
receiving a data stream captured by a camera;
segmenting the data stream into one or more data frames; and
encoding the one or more data frames using one or more encoding techniques to generate an encoded data stream, the encoded data stream comprising one or more identifiers, such that tampering or deepfake generation causes detectable alteration of the one or more identifiers.

15. The one or more non-transitory computer-readable media of claim 14, wherein the one or more identifiers are associated with at least one of an origin of the data stream, a chain of custody of the data stream, or metadata of the data stream.
